# EUROPÄISCHE PATENTSCHRIFT

(11) **EP 0 508 470 B1**
(45) Veröffentlichungstag und Bekanntmachung des Hinweises auf die Patenterteilung: **22.07.1998**
(21) Anmeldenummer: 92106276.6
(22) Anmeldetag: 10.04.1992
(51) Int. Cl.: H04B 10/10, H04B 10/04

(54) **IR-Strahler**
Infrared radiator
Emetteur infrarouge

(30) Priorität: 11.04.1991 DE 4111840
(43) Veröffentlichungstag der Anmeldung: 14.10.1992
(73) Patentinhaber: Brähler, Helmut, D-53639 Königswinter (DE)
(72) Erfinder: Brähler, Helmut, D-53639 Königswinter (DE)
(74) Vertreter: Turi, Michael, Dipl.-Phys.

(56) Entgegenhaltungen:
- EP-A- 0 196 347
- GB-A- 2 226 729
- PATENT ABSTRACTS OF JAPAN vol. 13, no. 531 (E-851)1989 & JP-A-12 15 139 (TAKENAKA KOMUTEN)

## Beschreibung

Die Erfindung betrifft eine Vorrichtung zur IR-Trägerwellenübertragung von Informationen, insbesondere akustischer und datenmäßiger Art, von einer Sendeeinheit zu Empfangsbereichen mit einem die IR-Trägerwelle abstrahlenden IR-Strahler nach dem Oberbegriff von Anspruch 1.

Derartige, bekannte Infrarotlicht-Strahler werden dazu verwendet, Informationen beispielsweise akustischer Art in einen exakt begrenzten zugeordneten Bereich eines Raumes zu übertragen. Eine derartige Übertragung ist insbesondere beim Dolmetschen einer Person während eines Vortrages wie aber auch bei der Erläuterung von Exponaten in Ausstellungen üblich. Sie geht bekanntermaßen folgendermaßen vonstatten:

Der Infrarotlicht-Strahler weist eine Platine mit mehreren IR-Sendedioden auf, die ein gerichtetes IR-Lichtbündel abstrahlen. Dabei ist bzw. wird das IR-Licht sozusagen doppelt moduliert. Um unterschiedliche Informationen oder gleiche Informationen in anderer Darbietung in denselben Bereich im Raum abzustrahlen, werden zunächst mehrere Tonkanäle im Bereich von 40 bis 1500 kHz (Kanalabstand 40 kHz) zur Verfügung gestellt. Die übliche Anzahl derartiger Tonkanäle beläuft sich auf 12 oder mehr.

Die Tonkanäle sind physikalisch gesehen Trägerwellen, die sich jeweils durch ihre sozusagen modulierte Frequenz voneinander unterscheiden. Wurde eine Trägerwelle aus dem zuvorgenannten Frequenzbereich ausgewählt, so erfolgt die zweite Modulation. Hierbei handelt es sich um eine Amplitudenmodulation der jeweiligen Trägerwelle, sprich also des jeweilig gewählten Tonkanals. Diese Amplitudenmodulation bewirkt schlußendlich die Übertragung von Information.

IR-Sendedioden strahlen je nach ihrer Konstruktion das IR-Licht mit einer Bündelung zwischen 30 und 50° ab. Ist ein Strahler einmal montiert, so bestrahlt er immer die gleiche Fläche mit IR-Licht. Bei handelsüblichen IR-Strahlern mit einem Abstrahlwinkel von 50°, sowie einer Strahlungsleistung einer einzelnen IR-Sendediode von ca. 25 Milliwatt ist eine große Anzahl einzelner IR-Sendedioden erforderlich (etwa 150 - 300) um eine Lichtleistung des Strahlers von 5 - 10 Watt erzielen zu können.

Die GB-A-2 226 729 befaßt sich mit einer Vorrichtung zur IR-Trägerwellenübertragung der eingangs genannten Art. Es werden dort mehrere kombinierte IR-Senderempfänger verwendet, deren Senderteil eine IR-Quelle aufweist, welche in einem Abstand von einer Fresnel-Linse angeordnet ist. Der Abstand zwischen IR-Strahlungsquelle und Linse wird beim Zusammenbau des IR-Strahlungsquelle stets nur einmal einjustiert, nämlich auf die Erzeugung eines parallelen Strahlenbündels, d.h. auf einen Abstrahlwinkel von Null. Eine Änderung des Abstrahlwinkels ist im Betrieb nicht vorgesehen.

Auch das in der EP-A-0 196 347 offenbarte IR-Kommunikationssystem verwendet keine IR-Strahler veränderlicher Abstrahlcharakteristik.

Der Vollständigkeit halber sei noch auf PATENT ABSTRACTS OF JAPAN of JP 1215139 hingewiesen, der optische Strahler behandelt, deren Abstrahlcharakteristik durch Verwendung verschiedenartiger optischer Linsen beeinflußt wird.

Herkömmliche Strahler haben demnach folgende Nachteile, die anhand praxisorientierter Beispiele im folgenden näher erläutert werden:

Müssen lediglich kleine Flächen gezielt mit IR-Licht versorgt werden, beispielsweise um den Vorsitzendentisch auf einer großen Bühne, das Rednerpult in der Ecke einer großen Bühne ohne Sitzmöglichkeiten oder eine mit den großen IR-Strahlern nicht ganz ausgeleuchtete "Nische" eines Saales zu bestrahlen, so sind große Strahler mit großem Abstrahlwinkel, d.h. breitem Strahlungskegel unzweckmäßig. Die nicht benötigte Infrarot-Energie, die nicht auf das mit Information zu versorgende Objekt gerichtet ist, verpufft ungenützt. Für einen derartigen Fall wäre also ein großer Strahler mit breitem Strahlungskegel, da nicht wirtschaftlich optimal eingesetzt, zu teuer.

Bei einem anderen, praxisnahen Beispiel konnten bislang mit den herkömmlichen IR-Strahlern keine zufriedenstellenden Ergebnisse erzielt werden. Die letztendlich gewünschte Bestrahlung ist vielmehr garnicht möglich. Bei diesem der Erläuterung des Standes der Technik dienenden Beispiel handelt es sich um die Versorgung kleiner, definierter Flächen eines Raumes mit IR-Licht, wie dies beispielsweise in Ausstellungen gewünscht wird. Hier sollte nicht eine überlappende und flächendeckende, sondern lediglich eine gerichtete IR-Lichtversorgung ermöglicht werden. Bei fest definiertem Abstrahlwinkel ist dies jedoch nicht durchführbar, da die Ausdehnung der bestrahlten Fläche nicht verändert wird.

Ziel der Erfindung ist es, bekannte IR-Strahler hinsichtlich derartiger Nachteile zu verbessern.

Dieses Ziel wird bei einer gattungsgemäßen Vorrichtung zur IR-Trägerwellenübertragung durch eine Einrichtung zur Änderung des Abstrahlwinkels der in Anspruch 1 beschriebenen Art erreicht.

Hierbei ist insbesondere von Vorteil, daß der Bündelungsgrad und damit die auf eine Fläche bezogene IR-Lichtleistung des IR-Strahlers nicht mehr - wie bisher - konstant ist, sondern je nach Erfordernis angepaßt werden kann. Besonders bevorzugt ist der Abstrahlwinkel zwischen 30 und 120° einstellbar. Damit kann die mit IR-Licht zu versorgende Fläche - bei gleicher Montagehöhe eines IR-Strahlers über einen sehr weiten Bereich variiert werden.

Vorteilhaft weist bei einem erfindungsgemäßen IR-Strahler die Einrichtung zur Änderung des Abstrahlwinkels einen Sender, insbesondere bestehend aus wenigsten einer IR-Sendediode, sowie eine den IR-Strahlengang beeinflussende Einrichtung auf.
Mit Hilfe der zumeist auf einer gemeinsamen Platine angeordneten IR-Sendedioden kann die erforderliche IR-Lichtleistung für die Bestrahlung einer Fläche erzeugt werden. Derartige IR-Senderdioden strahlen dann das für die Übertragung von Information erforderliche IR-Lichtbündel ab. Durch die den IR-Strahlengang beeinflussende Einrichtung wird auf die Qualität der vom Sender abgestrahlten IR-Lichtbündel kein Einfluss genommen. Lediglich deren räumliche Verteilung bzw. flächenmäßige Verteilung am Ort der Bestrahlung wird beeinflußt.

Bei einem weiteren bevorzugten Ausführungsbeispiel des erfindungsgemäßen IR-Strahlers sind der Sender und die den IR-Strahlengang beeinflussende Einrichtung relativ zueinander beweglich angeordnet (Anspruch 2). Bei einem weiteren bevorzugten Ausführungsbeispiel ist lediglich der Sender beweglich (Anspruch 3), in einem anderen Ausführungsbeispiel nur die den IR-Strahlengang beeinflussende Einrichtung (Anspruch 4). Die Änderung des Abstrahlwinkels für die vom IR-Strahler herrührende Strahlung kann auf diese Weise mit einem Minimum an Aufwand erreicht werden. Dazu müssen lediglich ein, bzw. im Höchstfall 2 Teile bewegt werden. Insbesondere die Zeit für die Einstellung der optimalen Bestrahlung einer Fläche kann verkürzt werden.

Bei einer besonders bevorzugten Ausführungsform des erfindungsgemäßen IR-Strahlers sind Mittel zur automatischen Einstellung des für die jeweils gewünschte Lichtleistung erforderlichen Abstandes zwischen Sender und IR-Strahlengang beeinflussender Einrichtung vorgesehen (Anspruch 5). Durch fortwährende Messung beispielsweise mit Hilfe von Photometern, kann jederzeit die von den IR-Strahlen bestrahlte Fläche ermittelt werden. Sollte die gewünschte Ausdehnung an bestrahlter Fläche noch nicht erzielt sein, so kann mittels einer Steuerung eine automatische Nachregulierung des Abstandes derart erfolgen, daß nach kurzer Zeit schon die gewünschte Fläche bestrahlt ist. Bei einem weiteren, bevorzugten Ausführungsbeispiel des erfindungsgemäßen IR-Strahlers kann die Einstellung des für die jeweils gewünschte Lichtleistung erforderlichen Abstandes zwischen Sender und IR-Strahlengang beeinflussender Einrichtung mittels bekannter Mittel manuell erfolgen (Anspruch 6). Hierdurch können die Kosten für einen IR-Strahler gegenüber einem IR-Strahler mit automatischer Einstellung reduziert werden.

Bei einer weiteren bevorzugten Ausführungsform des erfindungsgemäßen IR-Strahlers ist die den IR-Strahlengang beeinflussende Einrichtung eine IR-strahlenverträgliche Sammellinse (Anspruch 7). Bekanntlich hat eine derartige Sammellinse die Wirkung, daß parallel zu ihrer optischen Achse durch sie durchtretende Strahlen im Brennpunkt F gesammelt werden. Die Veränderung des IR-Strahlenganges kann durch einfachste Abbildungsgleichungen vorbestimmt werden. Damit wird die Vorabplanung der Übertragung von Information in Raumbereiche erheblich vereinfacht. Durch die Konzentration der IR-Strahlung mit Hilfe der Sammellinse ist eine Konzentration der Strahlung und damit auch eine Erhöhung der Leistung innerhalb einer ganz bestimmten Fläche erzielbar. Aufgrund der Konzentration ist beispielsweise bei geringer Anzahl an Sendedioden des IR-Strahlers und kleinerer zu bestrahlender Fläche die gleiche Strahlungsleistung wie bei demgegenüber größerer Anzahl an Sendedioden und größerer zu bestrahlender Fläche möglich.

Bei einer besonders bevorzugten Ausführungsform des erfindungsgemäßen IR-Strahles können die zuvor erwähnten Vorteile dadurch erzielt werden, daß die den IR-Strahlengang beeinflussende Einrichtung ein IR-strahlenverträglicher Hohlspiegel ist (Anspruch 8). Selbstverständlich ist als die den IR-Strahlengang beeinflussende Einrichtung jegliche optische Anordnung denkbar, die im wesentlichen den Bedingungen genügt parallel zu ihrer optischen Achse einfallende bzw. durchtretende Strahlen im Brennpunkt zu sammeln. Dies ist beispielsweise auch durch eine reflektierende oder brechende, flexible Schicht verwirklicht, deren Radius durch äußere Kraftbeanspruchung den jeweiligen optischen Abbildungsbedürfnissen angepaßt wird.

Bei einer ganz besonders vorteilhaften Ausführungsform des erfindungsgemäßen IR-Strahlers sind Mittel zur Auswahl wenigstens einer vorgegebenen Trägerwelle und deren Amplitudenmodulation vorgesehen (Anspruch 9). Dadurch ist sichergestellt, daß in jedem Fall eine gewünschte Trägerwelle ganz bestimmter Frequenz bereitgestellt ist. Diese Trägerwelle wird dann amplitudenmodelliert, wodurch die Übertragung der Information an den Empfänger erfolgt.

Bei einer weiteren vorteilhaften Ausführungsform des erfindungsgemäßen IR-Strahlers weist der Strahler eine eigenständige Stromversorgung, insbesondere eine Batterie auf (Anspruch 10). Dadurch kann der einzelne IR-Strahler als unabhängiges System gehandhabt werden. Lästige Verkabelungen zum Zwecke der Stromversorgung entfallen. Aufgrund der integrierten Stromversorgung sind beliebige Anordnungen des IR-Strahlers möglich. Die Verblendung optisch ansonsten störender Kabel ist vermieden.

Schließlich weist ein weiterer, vorteilhafter IR-Strahler Mittel, insbesondere Bewegungsdedektoren zur Aktivierung der Sendefunktion des Strahlers auf (Anspruch 11). Ein bestimmter IR-Strahler wird daher nur dann aktiviert, wenn er auch effektiv Informationen übertragen soll. Bei einer derartiken Aktivierung ist zusätzlich sichergestellt, daß die zu übertragende Information an die Empfängerperson von Beginn an übertragen wird.

Ausführungsbeispiele der Erfindung sind in den Zeichnungen dargestellt und werden im folgenden näher erläutert.

Es zeigen:
- Fig. 1: eine schematische Darstellung der Übertragung von Information an eine Empfängerperson mit Hilfe von IR-Strahlern;
- Fig. 2: einen teilweisen Schnitt durch den erfindungsgemäßen IR-Strahler und
- Fig. 3: eine Seitenansicht des erfindungsgemäßen IR-Strahlers von Fig. 2.

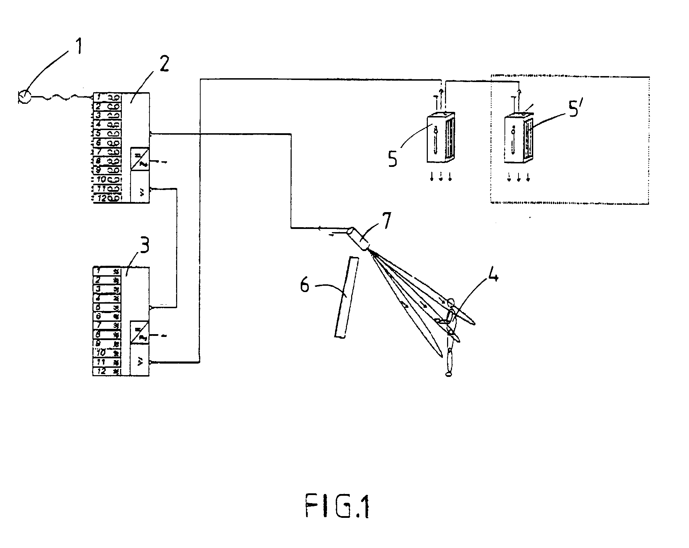

Fig. 1. zeigt eine ansich bekannte Übertragungsanlage mit einem Mikrofon 1, einer Zentrale 2, in der 12 Sprachspeicher untergebracht sind sowie einem Sender 3, in dem die übliche Modulation erfolgt.

Ist zunächst ein quasi frequenzmodulierter Tonkanal im Bereich von vorzugsweise 40 - 1500 kHz (Kanalabstand etwa 40 kHz) ausgewählt, so erfolgt schließlich eine Amplitudenmodulation dieses Tonkanals zwecks Übertragung der gewünschten Information. Die Amplitudenmodulation der Tonkanäle erfolgt im Bereich von ca. 900 nm.

Zur Bestrahlung einer Empfängerperson 4 sind IR-Strahler 5 in Richtung des Empfängers 4, d.h. nach unten strahlend aufgehängt. Der Ort für die Aufhängung des IR-Strahlers 5 ist davon abhängig, welche darunterliegende Fläche von dem IR-Strahlungskegel bestrichen werden soll. Im vorliegenden Fall handelt es sich beispielsweise um die unmittelbare Fläche vor einem Exponat 6. Daß die Empfängerperson 4 in den von dem IR-Strahler 5 bestrichenen IR-Lichtbündelkegel eingetreten ist, wird durch einen bekannten Bewegungsdetektor 7 registriert. Dieser Bewegungsdetektor 7 aktiviert die Zentrale 2 und die Übertragung der gewünschten Information über Sender 3 und IR-Strahler 5 beginnt.

Ein in Fig. 1 an den IR-Strahler 5 in Reihe angeschlossener IR-Strahler 5' dient dazu, die gleiche Information punktuell einer weiteren, definierten Fläche zuzuführen.

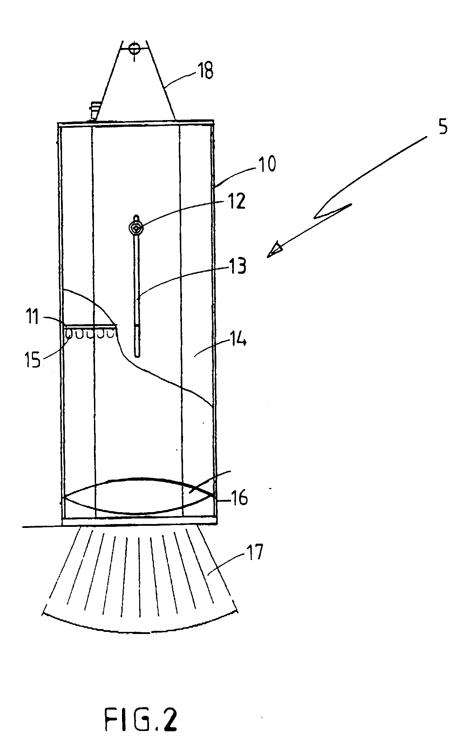

In Fig. 2 ist der IR-Strahler 5 detailliert dargestellt. Er besteht aus einem rechteckigen Gehäuse 10, innerhalb dessen eine Platine 11 quasi als beweglicher, horizontraler Zwischenboden angeordnet ist. Die Beweglichkeit der Platine 11 rührt daher, daß sie über bekannte Befestigungsmittel an einer Rändelschraube 12 fixiert ist, die wiederum in einem Schlitz 13 in einer Wand 14 des Gehäuses 10 vertikal geführt und justierbar ist. Durch Drehung des Kopfes der Rändelschraube 12, der außerhalb des Gehäuses 10 angeordnet einfach betätigbar ist, kann die Rändelschraube 12 in Zusammenwirken mit einer im Inneren des Gehäuses 10 angeordneten Gegenmutter (nicht gezeigt) höhenmäßig fixiert werden. Durch die Verbindung der Platine 11 mit den zuvor erwähnten Befestigungsmitteln ist damit aber auch die vertikale Position der Platine 11 festgelegt.

Die Platine 11 trägt auf ihrer in Abstrahlrichtung weisenden Fläche mehrere IR-Sendedioden 15 mit einer Strahlungsleistung von ca. 25 Milliwatt. Die Anzahl der IR-Sendedioden 15 hängt von der jeweils gewünschten Strahlungsleistung ab. Am Austritt des IR-Strahlenbündels aus dem IR-Strahler 5 ist eine Sammellinse 16 angeordnet. Sie dient in bekannterweise dazu, daß von den IR-Sendedioden 15 ausgestrahlte IR-Strahlenbündel optisch zu verarbeiten. Der im optischen Strahlengang nach der Sammellinse 16 erzeugte Strahlungskegel 17 wird bei Verringerung des Abstandes von Platine 11 zu Sammellinse 16 aufgeweitet; eine Vergößerung des Abstandes bewirkt demgegenüber eine Verengung des Strahlungskegels 17. Demzufolge ist durch simple Änderung des Abstandes zwischen Platine 11 und Sammellinse 16 der vom Strahlungskegel 17 beschriebene Abstrahlwinkel stufenlos einstellbar. Selbstverständlich hat die Aufweitung und Einengung des Strahlungskegels 17 Grenzen, bei denen eine Vergößerung bzw. eine Verkleinerung des Winkels nicht mehr sinnvoll erscheint. Dementsprechend kann der Winkel für den Strahlungskegel 17 vorzugsweise Werte zwischen 30 und 120° annehmen.

Zu Zwecken der Aufhängung weist der IR-Strahler 5 eine Halterung 18 an der Oberseite des Gehäuses 10 auf.

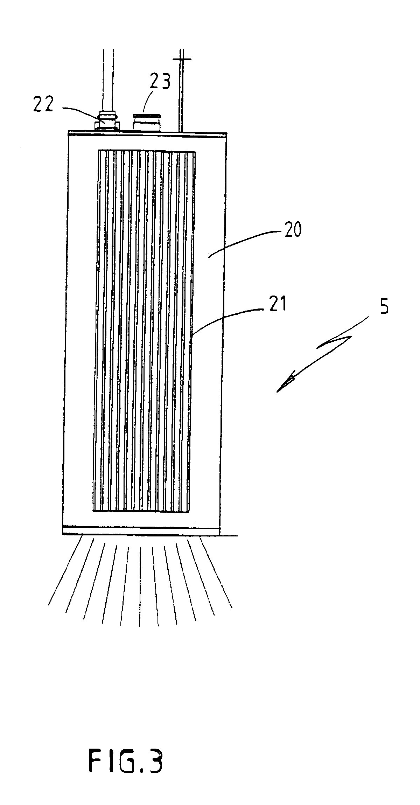

In Fig. 3 schließlich ist eine Seitenansicht des zuvor beschriebenen IR-Strahlers 5 dargestellt. Die Seitenwand 20 des IR-Strahlers 5 ist dabei in vertikaler Richtung von Kühlrippen 21 durchzogen. In dieser Darstellung sind an der Oberseite des IR-Strahlers 5 mehrere Anschlüsse erkennbar. Es handelt sich dabei um einen Netzanschluß 22 sowie den Anschluß 23 für ein Koax-Kabel zum Sender 3.

## Patentansprüche

1. Vorrichtung zur IR-Trägerwellenübertragung von Informationen, insbesondere akustischer und datenmäßiger Art, von einer Sendeeinheit zu Empfangsbereichen (4) mit einem die IR-Trägerwelle abstrahlenden IR-Strahler (5), der aufweist:
a) eine IR-Strahlungsquelle (11, 15) und
b) eine im Abstand zur IR-Strahlungsquelle (11, 15) angeordnete Einrichtung zur Beeinflussung des Abstrahlwinkels der aus dem IR-Strahler (5) austretenden IR-Strahlung;
gekennzeichnet durch
c) Mittel (12, 13, 14) zur Änderung des Abstandes zwischen der Strahlungsquelle (11, 15) und der den Abstrahlwinkel beeinflussenden Einrichtung (16), derart, daß der IR-Strahler (5) die IR-Trägerwelle unter einem so großen Abstrahlwinkel abstrahlt, daß deren Ausdehnung im Empfängerbereich (4) im wesentlichen gleich einer jeweils gewünschten Ausdehnung des Empfangsbereiches (5) ist.

2. Vorrichtung nach Anspruch 1, dadurch gekennzeichnet, daß der Sender (11, 15) und die den IR-Strahlengang beeinflussende Einrichtung (16) relativ zueinander beweglich angeordnet sind.

3. Vorrichtung nach einem der vorstehenden Ansprüche, dadurch gekennzeichnet,
daß nur der Sender (11, 15) beweglich ist.

4. Vorrichtung nach einem der vorstehenden Ansprüche, dadurch gekennzeichnet,
daß nur die den IR-Strahlengang beeinflussende Einrichtung (16) beweglich ist.

5. Vorrichtung nach einem der vorstehenden Ansprüche, gekennzeichnet
durch Mittel zur automatischen Einstellung des für die jeweils gewünschte Lichtleistung erforderlichen Abstandes zwischen Sender (11, 15) und IR-Strahlengang beeinflussender Einrichtung (16).

6. Vorrichtung nach einem der Ansprüche 2 bis 4, gekennzeichnet
durch Mittel (12, 13) zur manuellen Einstellung des für die jeweils gewünschte Lichtleistung erforderlichen Abstandes zwischen Sender (11, 15) und IR-Strahlengang beeinflussender Einrichtung (16).

7. Vorrichtung nach einem der vorstehenden Ansprüche, dadurch gekennzeichnet,
daß die den IR-Strahlengang beeinflussende Einrichtung (16) eine IR-Strahlen verträgliche Sammellinse ist.

8. Vorrichtung nach einem der vorstehenden Ansprüche, dadurch gekennzeichnet,
daß die den IR-Strahlengang beeinflussende Einrichtung (16) ein IR-Strahlen verträglicher Hohlspiegel ist.

9. Vorrichtung nach einem der vorstehenden Ansprüche, gekennzeichnet
durch Mittel zur Auswahl wenigstens einer vorgegebenen Trägerwelle und deren Amplitudenmodulation.

10. Vorrichtung nach einem der vorstehenden Ansprüche, dadurch gekennzeichnet,
daß der Strahler eine eigenständige Stromversorgung, insbesondere eine Batterie, aufweist.

11. Vorrichtung nach einem der vorstehenden Ansprüche, gekennzeichnet
durch Mittel, insbesondere Bewegungsdetektoren (7) zur Aktivierung der Sendefunktion des Strahlers (5).

## Claims

1. Device for the IR carrier wave transmission of information, especially of an acoustic and data-related type, from a transmitter unit to receiving zones (4) having an IR radiator (5) radiating the IR carrier wave which has:
a) an IR radiation source (11, 15) and
b) a device arranged at a distance from the IR radiation source (11, 15) for controlling the beam angle of the IR radiation emanating from the IR radiator (5);
characterised by
c) means (12, 13, 14) for changing the distance between the radiation source (11, 15) and the device (16) controlling the beam angle in such a way that the IR radiator (5) radiates the IR carrier wave at a beam angle of such magnitude that its extension in the receiving zone (4) is substantially the same as the extension of the receiving zone (4) desired at any time.

2. Device according to Claim 1, characterised in that the transmitter (11, 15) and the device (16) controlling the IR beam path are arranged in movable manner relative to one another.

3. Device according to one of the preceding claims, characterised in that only the transmitter (11, 15) is movable.

4. Device according to one of the preceding claims, characterised in that only the device (16) controlling the IR beam path is movable.

5. Device according to one of the preceding claims, characterised by means for the automatic adjustment of the distance between the transmitter (11, 15) and the device (16) controlling the IR beam path required for the luminous power desired at any time.

6. Device according to one Claims 2 to 4, characterised by means (12, 13) for the manual adjustment of the distance between the transmitter (11, 15) and the device (16) controlling the IR beam path required for the luminous power desired at any time.

7. Device according to one of the preceding claims, characterised in that the device (16) controlling the IR beam path is a condensing lens tolerant to IR rays.

8. Device according to one of the preceding claims, characterised in that the device (16) controlling the IR beam path is a concave mirror tolerant to IR rays.

9. Device according to one of the preceding claims, characterised by means for the selection of at least one specified carrier wave and its amplitude modulation.

10. Device according to one of the preceding claims, characterised in that the radiator possesses an independent power supply, especially a battery.

11. Device according to one of the preceding claims, characterised by means, especially movement detectors (7) for the activation of the transmitting function of the radiator (5).

## Revendications

1. Dispositif de transmission, à partir d'une unité émettrice vers des zones de réception (4), d'ondes infra-rouges porteuses d'informations, en particulier acoustiques et concernant des données, incluant un projecteur (5) d'infra-rouges qui émet l'onde porteuse infra-rouge et comporte:
a) une source (11, 15) de rayonnement infra-rouge et
b) un instrument agencé à distance de la source (11, 15) de rayonnement infra-rouge et destiné à influencer l'angle de rayonnement du rayonnement infra-rouge sortant du projecteur (5) d'infra-rouges
caractérisé par
c) des moyens (12, 13, 14) de modification de la distance entre la source (11, 15) de rayonnement et l'instrument (16) influençant l'angle de rayonnement d'une manière telle que le projecteur (5) d'infra-rouges rayonne l'onde porteuse infra-rouge selon un angle de rayonnement suffisamment grand pour que son étendue dans la zone de réception (4) soit sensiblement égale à une étendue respective souhaitée de la zone de réception (5).

2. Dispositif selon la revendication 1, caractérisé en ce que l'émetteur (11, 15) et l'instrument (16) influençant le trajet des rayons infra-rouges sont agencés de façon mobile l'un par rapport à l'autre.

3. Dispositif selon l'une des revendications précédentes, caractérisé en ce que
seul l'émetteur (11, 15) est mobile.

4. Dispositif selon l'une des revendications précédentes, caractérisé en ce que
seul l'instrument (16) influençant le trajet des rayons infra-rouges est mobile.

5. Dispositif selon l'une des revendications précédentes, caractérisé par
des moyens de réglage automatique de la distance, entre l'émetteur (11, 15) et l'instrument (16) influençant le trajet des rayons infra-rouges, nécessaire pour la puissance lumineuse respectivement souhaitée.

6. Dispositif selon l'une des revendications 2 à 4, caractérisé par
des moyens de réglage manuel de la distance, entre l'émetteur (11, 15) et l'instrument (16) influençant le trajet des rayons infra-rouges, nécessaire pour la puissance lumineuse respectivement souhaitée.

7. Dispositif selon l'une des revendications précédentes, caractérisé en ce que
l'instrument (16) influençant le trajet des rayons infra-rouges est une lentille convergente compatible avec les rayons infra-rouges.

8. Dispositif selon l'une des revendications précédentes, caractérisé en ce que
l'instrument (16) influençant le trajet des rayons infra-rouges est un miroir concave compatible avec les rayons infra-rouges.

9. Dispositif selon l'une des revendications précédentes, caractérisé par
des moyens de choix d'au moins une onde porteuse prédéterminée et de sa modulation d'amplitude.

10. Dispositif selon l'une des revendications précédentes, caractérisé en ce que
l'émetteur comporte une alimentation indépendante de courant, en particulier une batterie.

11. Dispositif selon l'une des revendications précédentes, caractérisé par
des moyens, en particulier des détecteurs (7) de mouvement, pour activer le fonctionnement du projecteur (5).
